# EUROPEAN PATENT APPLICATION

(11) **EP 3 925 817 A1**
(43) Date of publication of application: **22.12.2021**
(21) Application number: 20852853.9
(22) Date of filing: 14.04.2020
(51) Int. Cl.: B60L 50/64

(54) **CHARGEABLE-DISCHARGEABLE ENERGY STORAGE APPARATUS, WIRELESS CHARGING SYSTEM AND ELECTRIC VEHICLE**

(30) Priority: 09.08.2019 CN 201910732509
(71) Applicant: Huawei Digital Power Technologies Co., Ltd., Shenzhen, 518043 (CN)
(72) Inventor: GAO, Jing, Shenzhen, Guangdong 518129 (CN)
(74) Representative: Pfenning, Meinig & Partner mbB
(86) International application number: PCT/CN2020/084627
(87) International publication number: WO 2021/027303

(57) **Abstract**

A rechargeable energy storage apparatus (10), a wireless charging system, and an electric vehicle are provided. The energy storage apparatus (10) includes a power receiving coil (11), an inverter-rectifier module (12), a control module (13), a battery cell module (14), and a heat dissipation plate (15). The inverter-rectifier module (13) is separately connected to the power receiving coil (11), the control module (13), and the battery cell module (14), the battery cell module (14) is connected to the control module (13), and the power receiving coil (11) is disposed on a lower side of the heat dissipation plate (15). The power receiving coil (11) is configured to generate an alternating current when receiving an alternating magnetic field generated by a transmitting coil (21) located on the ground. The control module (13) is configured to control the inverter-rectifier module (12) to convert the alternating current output by the power receiving coil (11) into a direct current and output the direct current to the battery cell module (14); and is further configured to control the inverter-rectifier module (12) to convert the direct current output by the battery cell module (14) into an alternating current, to drive an electric motor to work. The energy storage apparatus (10) integrates an inverter and a rectifier into one according to electrical principles, so that a quantity of components of the energy storage apparatus (10) is reduced, and manufacturing costs are reduced. The control module (13) in the energy storage apparatus (10) integrates functions of three types of controllers, and this improves overall control efficiency of the energy storage apparatus (10).

## Description

This application claims priority to Chinese Patent Application No. 201910732509.8, filed with the China National Intellectual Property Administration on August 9, 2019, and entitled "RECHARGEABLE ENERGY STORAGE APPARATUS, WIRELESS CHARGING SYSTEM, AND ELECTRIC VEHICLE", which is incorporated herein by reference in its entirety.

### TECHNICAL FIELD

Embodiments of this application relate to the field of electric vehicles, and in particular, to a rechargeable energy storage apparatus, a wireless charging system, and an electric vehicle.

### BACKGROUND

As a representative of new energy vehicles, electric vehicles have advantages such as green and environmental protection, zero emission, and easy to use, and market demands are increasing year by year. Electric vehicles are powered by vehicle-mounted battery packs, and the vehicle-mounted battery packs need to be charged in time to ensure an abundant quantity of electricity. Currently, a main charging manner is wired charging such as a charging pile, and this charging manner has safety risks such as ignition upon plugging and electric leakage, and has a disadvantage of being difficult to maintain. A wireless charging technology for electric vehicles is an innovative technology direction, and due to advantages of the technology such as convenient charging, no manual intervention, unattended charging station, low maintenance costs, a small floor area, and no electric leakage risk, wireless charging for the electric vehicles has become a current research focus.

Currently, an energy storage apparatus of an electric vehicle mainly includes a battery cell module, a heat dissipation plate, and a battery management system (BMS), and integration of other vehicle-mounted circuit components is not considered. In addition, some circuit components have relatively large volumes and weights, and therefore occupy large space at the bottom of the vehicle. Moreover, in a long continuous working process, a heat dissipation problem is also serious, and a heat dissipation design needs to be performed for different circuit components, and a heat dissipation system is comparatively complex.

In view of the foregoing technical problems, it is urgent to design a vehicle-mounted rechargeable energy storage apparatus, to implement requirements for miniaturization and lightweight of a whole vehicle.

### SUMMARY

This application provides a rechargeable energy storage apparatus, a wireless charging system, and an electric vehicle. The energy storage apparatus integrates functions of an inverter and a rectifier, and also integrates functions of three types of controllers. Therefore, a quantity of components of the energy storage apparatus is reduced, and design requirements for miniaturization and lightweight of the apparatus are implemented.

A first aspect of this application provides a rechargeable energy storage apparatus, including: a power receiving coil, an inverter-rectifier module, a control module, a battery cell module, and a heat dissipation plate. The inverter-rectifier module is separately connected to the power receiving coil, the control module, and the battery cell module, the battery cell module is connected to the control module, and the power receiving coil is disposed on a lower side of the heat dissipation plate.

The power receiving coil is configured to generate an alternating current when receiving an alternating magnetic field generated by a transmitting coil located on the ground.

The control module is configured to control the inverter-rectifier module to convert the alternating current output by the power receiving coil into a direct current and output the direct current to the battery cell module, and the control module is further configured to control the inverter-rectifier module to convert the direct current output by the battery cell module into an alternating current, to drive an electric motor to work.

In the rechargeable energy storage apparatus in this solution, the power receiving coil, the inverter-rectifier module, and the control module are integrated into an existing battery pack, to implement charging and discharging functions of the energy storage apparatus. Because the energy storage apparatus includes the inverter-rectifier module including functions of an inverter and a rectifier, the module integrates the inverter and the rectifier into one according to electrical principles, to implement charging and discharging processes of the energy storage apparatus, so that a quantity of components of the energy storage apparatus is reduced, and manufacturing costs of the energy storage apparatus are reduced. Because the control module of the energy storage apparatus integrates a wireless charging controller, a discharging controller, and a controller of the battery cell module, control efficiency of the energy storage apparatus is improved, and a communication process between a plurality of controllers is avoided. This helps optimize and update a control process of the energy storage apparatus.

Optionally, the inverter-rectifier module includes a three-phase bridge circuit and a switch module. A direct current terminal of the three-phase bridge circuit is connected to the battery cell module, and an alternating current terminal of the three-phase bridge circuit is separately connected to the electric motor and the power receiving coil by using the switch module. The control module is separately connected to the three-phase bridge circuit and the switch module.

In the foregoing implementation, one end of the inverter-rectifier module is connected to a battery (namely, the battery cell module), and the other end is separately connected to the electric motor and the power receiving coil by using the switch module. The control module controls the three-phase bridge circuit and the switch module in the inverter-rectifier module to implement the charging and discharging processes of the energy storage apparatus: When the inverter-rectifier module is connected to the electric motor, the battery supplies power to the electric motor; and when the inverter-rectifier module is connected to the power receiving coil, the alternating current generated by the power receiving coil is used to charge the battery.

Optionally, the switch module includes a first switch module and a second switch module that are connected in parallel; and the electric motor is connected in series on a tributary on which the first switch module is located, and the power receiving coil is connected in series on a tributary on which the second switch module is located.

In the foregoing implementation, the control module may control the first switch module and the second switch module, to implement connection of the electric motor and disconnection of the power receiving coil (that is, a discharging process), or implement disconnection of the electric motor and connection of the power receiving coil (that is, a charging process).

Optionally, the three-phase bridge circuit includes three groups of power semi-conductors, the three groups of power semi-conductors form three bridge arms, the electric motor is connected to a midpoint of each bridge arm by using the first switch module, and the power receiving coil is connected to the midpoint of each bridge arm by using the second switch module.

Optionally, the power receiving coil may be a three-phase power receiving coil, or may be a single-phase power receiving coil.

In an implementation, the power receiving coil is a three-phase power receiving coil, and the first switch module and the second switch module may be three ways of single-pole single-throw switches.

In another implementation, the power receiving coil is a single-phase power receiving coil, the first switch module may be three ways of single-pole double-throw switches, and the second switch module may be two ways of single-pole double-throw switches.

Optionally, the energy storage apparatus further includes a resonant circuit, and the resonant circuit is configured to compensate for an inductance amount of the power receiving coil. The resonant circuit may be connected in series, in parallel, or in series and in parallel to the power receiving coil.

Optionally, the inverter-rectifier module, the control module, and the battery cell module are disposed on an upper side of the heat dissipation plate. In this disposing manner, the power receiving coil is isolated from another circuit component of the energy storage apparatus, thereby avoiding electromagnetic interference and improving working stability of the energy storage apparatus.

Optionally, the energy storage apparatus further includes a high-voltage interface, and the inverter-rectifier module is connected to the electric motor by using the high-voltage interface.

Optionally, the control module includes a wireless transmit antenna, and the control module is communicatively connected, by using the wireless transmit antenna, to a control module located on the ground.

A second aspect of this application provides a wireless charging system for an electric vehicle, including: the energy storage apparatus according to any implementation of the first aspect of this application, and a transmitting coil, a rectifier module, an inverter module, and a ground control module that are located on the ground.

The ground control module is configured to: control the rectifier module to convert a first alternating current on a power grid side into a direct current, and control the inverter module to convert the direct current into a second alternating current, and the transmitting coil is configured to generate an alternating magnetic field under the action of the second alternating current.

Optionally, the transmitting coil may be a three-phase power receiving coil, or may be a single-phase power receiving coil.

Optionally, a resonant circuit may be disposed between the transmitting coil and the inverter module, and the resonant circuit is configured to compensate for an inductance amount of the transmitting coil.

A third aspect of this application provides an electric vehicle, including the energy storage apparatus according to any implementation of the first aspect of this application. The energy storage apparatus is disposed at the bottom of the electric vehicle.

The embodiments of this application provide the rechargeable energy storage apparatus, the wireless charging system, and the electric vehicle. The energy storage apparatus includes the power receiving coil, the inverter-rectifier module, the control module, the battery cell module, and the heat dissipation plate. The inverter-rectifier module is separately connected to the power receiving coil, the control module, and the battery cell module, the battery cell module is connected to the control module, and the power receiving coil is disposed on the lower side of the heat dissipation plate. The power receiving coil in the energy storage apparatus generates an alternating current, and the control module controls the inverter-rectifier module to convert the alternating current into a direct-current charging current and output the direct-current charging current to the battery cell module, to charge the battery cell module. The battery cell module in the energy storage apparatus outputs a direct-current discharging current, and the control module controls the inverter-rectifier module to convert the direct-current discharging current into an alternating-current discharging current and output the alternating-current discharging current to the electric motor, to supply power to the electric motor. The energy storage apparatus in this application includes the inverter-rectifier module. The module integrates an inverter and a rectifier into one according to electrical principles, so that a quantity of components of the energy storage apparatus is reduced, and manufacturing costs are reduced. The control module in the energy storage apparatus in this application integrates the wireless charging controller, the discharging controller, and the controller of the battery cell module, so that overall control efficiency of the energy storage apparatus is improved.

### BRIEF DESCRIPTION OF DRAWINGS

FIG. 1 is a schematic diagram of a first spatial structure of a rechargeable energy storage apparatus according to an embodiment of this application;
FIG. 2 is a schematic diagram of a second spatial structure of a rechargeable energy storage apparatus according to an embodiment of this application;
FIG. 3 is a schematic diagram of a second spatial structure of a rechargeable energy storage apparatus according to an embodiment of this application;
FIG. 4 is a schematic diagram of a first type of circuit connection of a rechargeable energy storage apparatus according to an embodiment of this application;
FIG. 5 is a schematic diagram of a second type of circuit connection of a rechargeable energy storage apparatus according to an embodiment of this application; and
FIG. 6 is a schematic diagram of a wireless charging system for an electric vehicle according to an embodiment of this application.

### DESCRIPTION OF EMBODIMENTS

An objective of this application is to overcome disadvantages of the prior art, to implement high integration, miniaturization, and lightweight of a rechargeable energy storage apparatus, and to ensure charging efficiency and safety of wireless charging.

To achieve the foregoing objective, an embodiment of this application provides a rechargeable energy storage apparatus, including a power receiving coil, an inverter-rectifier module, a control module, and a battery cell module. The inverter-rectifier module is separately connected to the power receiving coil, the control module, and the battery cell module. The control module is further connected to the battery cell module. The control module controls the inverter-rectifier module to implement a charging or discharging function. In addition, the control module is further configured to monitor a working status of the battery cell module, to ensure that the battery cell module works in a normal status. Circuit components in the rechargeable energy storage apparatus provided in this embodiment are disposed on the same heat dissipation plate, and this simplifies a design of a heat dissipation system.

It should be noted that the rechargeable energy storage apparatus provided in this embodiment may be applied to a wireless charging vehicle assembly of an electric vehicle, and may further be applied to another system that includes both a wireless charging function and a discharging function. This is not specifically limited in this embodiment.

The following describes in detail the rechargeable energy storage apparatus in this application by using specific embodiments. The following several specific embodiments may be combined with each other, and same or similar content is not repeatedly described in different embodiments. For ease of understanding, an electric vehicle is used as an example for description in the following several embodiments.

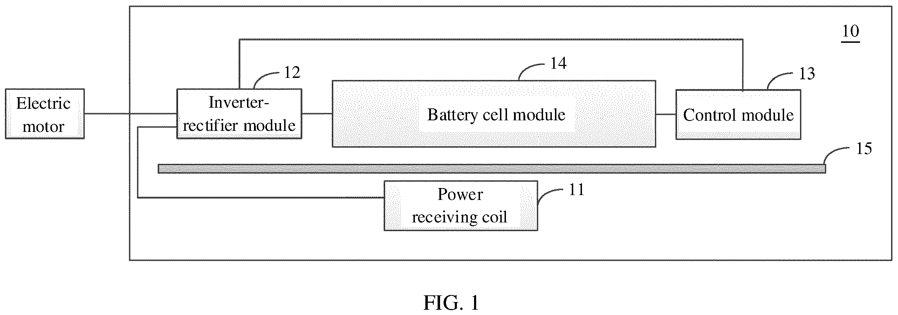

FIG. 1 is a schematic diagram of a first hardware connection of a rechargeable energy storage apparatus according to an embodiment of this application. As shown in FIG. 1, a rechargeable energy storage apparatus 10 provided in this embodiment includes a power receiving coil 11, an inverter-rectifier module 12, a control module 13, a battery cell module 14, and a heat dissipation plate 15.

The inverter-rectifier module 12 is separately connected to the power receiving coil 11, the control module 13, and the battery cell module 14, and the battery cell module 14 is connected to the control module 13. The power receiving coil 11 is disposed on a lower side of the heat dissipation plate 15.

The power receiving coil 11 is configured to generate an alternating current when receiving an alternating magnetic field generated by a transmitting coil located on the ground.

The control module 13 is configured to control the inverter-rectifier module 12 to convert the alternating current output by the power receiving coil 11 into a direct current and output the direct current to the battery cell module 14. The control module 13 is further configured to control the inverter-rectifier module 12 to convert the direct current output by the battery cell module 14 into an alternating current, to drive an electric motor to work.

The power receiving coil in this embodiment may be designed as a three-phase power receiving coil or a single-phase power receiving coil. This is not specifically limited in this embodiment. It should be noted that, the foregoing two manners of connecting the power receiving coil and the inverter-rectifier module are different. This is specifically described in the following descriptions.

In this embodiment, the inverter-rectifier module has functions of both an inverter and a rectifier, and the control module can directly control the inverter-rectifier module to separately implement a rectifier function of converting an alternating current into a direct current and an inverter function of converting a direct current into an alternating current. Therefore, the two circuit components are integrated into one according to electrical principles, so that a quantity of components of the energy storage apparatus is reduced, and manufacturing costs of the energy storage apparatus are reduced.

The control module in this embodiment integrates functions of a wireless charging controller (configured to control a charging process), a discharging controller (for example, a motor control unit (MCU) in an electric vehicle), and a controller of the battery cell module (for example, a battery management system (BMS) in the electric vehicle), to control an entire working procedure of the energy storage apparatus. The working procedure includes a charging process, a discharging process, and battery management. This avoids communication between the foregoing plurality of controllers, improves control efficiency of the energy storage apparatus, reduces manufacturing costs of the energy storage apparatus, and helps optimize and update a control process of the energy storage apparatus.

In this embodiment, the power receiving coil, the inverter-rectifier module, the control module, and the battery cell module may be disposed near the same heat dissipation plate, for example, on an upper side or a lower side of the heat dissipation plate, to resolve a heat dissipation problem in a long continuous working process. An electric vehicle is used as an example. A natural cooling manner may be used for a wireless charging vehicle assembly at a power level of 3.6 KW. However, because power is relatively low, charging time is relatively long, and user experience is affected. Therefore, after the power level is increased to 6.6 KW, a water cooling design needs to adopted for the heat dissipation plate. In other words, the heat dissipation plate may be a water cooling plate. Because the wireless charging vehicle assembly needs to be installed at the bottom of a chassis of the electric vehicle, the water cooling plate needs to be disposed at the bottom of the electric vehicle.

Optionally, the inverter-rectifier module, the control module, and the battery cell module may all be disposed on the upper side of the heat dissipation plate. In this structural layout, the power receiving coil is isolated from another circuit component of the energy storage apparatus, thereby avoiding electromagnetic interference, and improving working stability of the energy storage apparatus.

In the rechargeable energy storage apparatus provided in this embodiment of this application, the power receiving coil generates an alternating current, the control module controls the inverter-rectifier module to convert the alternating current into a direct-current charging current, and output the direct-current charging current to the battery cell module, the battery cell module outputs a direct-current discharging current, and the control module controls the inverter-rectifier module to convert the direct-current discharging current into an alternating-current discharging current, and output the alternating-current discharging current to the electric motor. In the foregoing process, charging and discharging processes of the energy storage apparatus are implemented, a quantity of components of the energy storage apparatus is reduced, manufacturing costs are reduced, and overall control efficiency of the energy storage apparatus is improved.

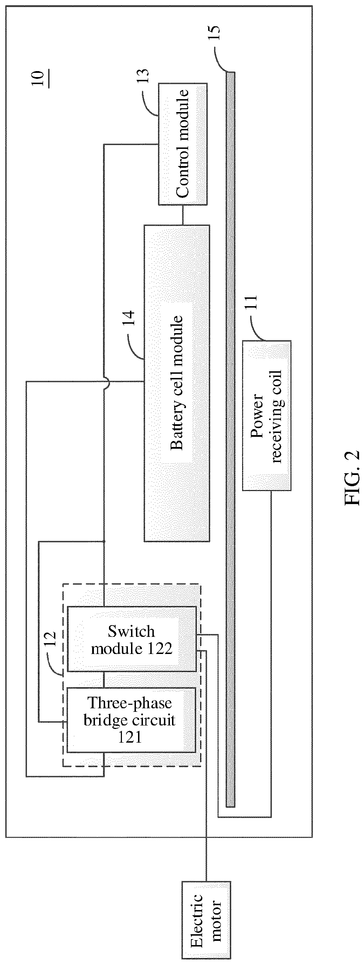

FIG. 2 is a schematic diagram of a second hardware connection of a rechargeable energy storage apparatus according to an embodiment of this application. On the basis of the embodiment shown in FIG. 1, as shown in FIG. 2, the rechargeable energy storage apparatus 10 in this embodiment includes a power receiving coil 11, an inverter-rectifier module 12, a control module 13, a battery cell module 14, and a heat dissipation plate 15.

The inverter-rectifier module 12 includes a three-phase bridge circuit 121 and a switch module 122. A direct current terminal of the three-phase bridge circuit 121 is connected to the battery cell module 14, and an alternating current terminal of the three-phase bridge circuit 121 is separately connected to the electric motor and the power receiving coil 11 by using the switch module 122. The control module 13 in this embodiment is separately connected to the three-phase bridge circuit 121 and the switch module 122, and is configured to control the inverter-rectifier module 12 to implement an inverter function or a rectifier function.

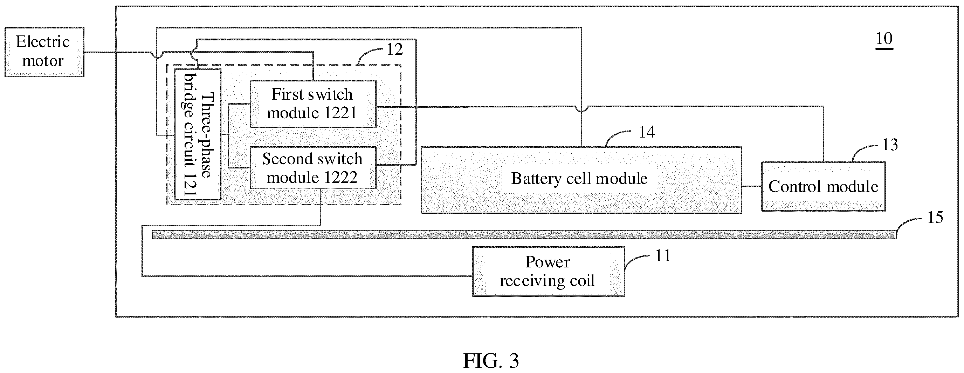

The control module 13 in this embodiment controls the three-phase bridge circuit 121 and the switch module 122 in the inverter-rectifier module 12 to respectively implement a rectifier function of converting an alternating current into a direct current and an inverter function of converting a direct current into an alternating current. Therefore, the two circuit components are integrated into one according to electrical principles, so that a quantity of components of the energy storage apparatus is reduced, and manufacturing costs of the energy storage apparatus are reduced. An implementation of the three-phase bridge circuit 121 and the switch module 122 is shown in an embodiment shown in FIG. 3.

FIG. 3 is a schematic diagram of a third hardware connection of a rechargeable energy storage apparatus according to an embodiment of this application. On the basis of the embodiment shown in FIG. 2, as shown in FIG. 3, the switch module 122 in this embodiment includes a first switch module 1221 and a second switch module 1222 that are connected in parallel. The electric motor is connected in series on a tributary on which the first switch module 1221 is located. The power receiving coil 11 is connected in series on a tributary on which the second switch module 1222 is located.

In this embodiment, the control module 13 controls the first switch module 1221 to be closed, and controls the second switch module 1222 to be opened at the same time, to drive the electric motor to work. The control module 13 controls the first switch module 1221 to be opened, and controls the second switch module 1222 to be closed at the same time, to charge the battery cell module 14.

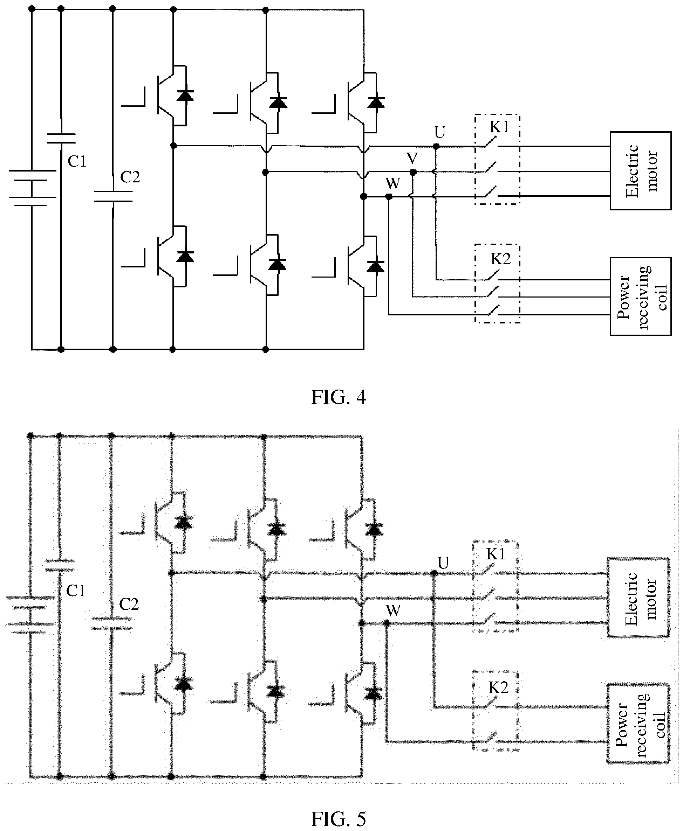

Specifically, the three-phase bridge circuit in the inverter-rectifier module 12 in this embodiment includes three groups of power semi-conductors, the three groups of power semi-conductors form three bridge arms, the electric motor is connected to a midpoint of each bridge arm by using the first switch module 1221, and the power receiving coil 11 is connected to the midpoint of each bridge arm by using the second switch module 1222. For details, refer to FIG. 4. Midpoints of the three bridge arms are respectively represented as U, V, and W. In FIG. 4, K1 is the first switch module 1221, and K2 is the second switch module 1222.

It should be noted that, the three groups of power semi-conductors in the three-phase bridge circuit in this embodiment are also separately connected to the control module 13 (not shown in FIG. 4). The control module 13 controls the three groups of power semi-conductors in the three-phase bridge circuit to implement an inverter function and a rectifier function of the inverter-rectifier module 12.

In the rechargeable energy storage apparatus provided in this embodiment of this application, the power receiving coil generates an alternating current, and the control module controls closed/open states of the two switch modules in the inverter-rectifier module, to separately implement a rectifier function of converting an alternating current into a direct current and an inverter function of converting a direct current into an alternating current. In the foregoing process, charging and discharging processes of the energy storage apparatus are implemented, a quantity of components of the energy storage apparatus is reduced, manufacturing costs are reduced, and overall control efficiency of the energy storage apparatus is improved.

On the basis of the foregoing embodiments, the rechargeable energy storage apparatus further includes a resonant circuit, and the resonant circuit is configured to compensate for an inductance amount of the power receiving coil, so that the entire circuit works together in a resonant state. Herein, any resonant circuit in the prior art may be used to compensate for an inductance of the power receiving coil, to improve efficiency of the circuit.

The resonant circuit in this embodiment may be connected in series to the power receiving coil, may be connected in parallel to the power receiving coil, or may be connected in series and in parallel to the power receiving coil. This is not specifically limited in this embodiment. When the energy storage apparatus is applied to a wireless charging vehicle assembly of the electric vehicle, a transmitting coil on the ground assembly may correspondingly also correspond to a similar resonant circuit, configured to compensate for an inductance amount of the transmitting coil, so that a circuit on the ground assembly works in a resonant state. On the basis of the foregoing embodiments, the rechargeable energy storage apparatus further includes a high-voltage interface, and the inverter-rectifier module is connected to the electric motor by using the high-voltage interface.

Optionally, on the basis of the foregoing embodiments, the control module includes a wireless transmit antenna, and the control module is communicatively connected, by using the wireless transmit antenna, to a control module located on the ground. In this embodiment, a wireless charging process mainly includes the following stages: a physical identification stage, a charging handshake stage, a charging parameter configuration stage, a charging stage, and a charging end stage. An electric vehicle is used as an example. When detecting that the electric vehicle enters a predetermined charging area, a control module on a vehicle assembly and the control module on the ground send an identification packet to each other, to determine parameter information of a battery of the electric vehicle and a charging device on the ground, for example, a protocol version, a battery type, a capacity, a working voltage of the battery, and a model of the charging device on the ground. After the charging handshake stage is completed, the control module on the vehicle assembly sends a packet of battery charging information (for example, a maximum working voltage, a maximum working current, or a charging temperature threshold) to the control module on a ground assembly, the control module on the ground assembly sends a packet of a maximum output capability to the control module on the vehicle assembly, and the control module on the vehicle assembly determines, based on the maximum output capability, whether to charge the electric vehicle. After both the control module on the vehicle assembly and the control module on the ground assembly are ready for charging and have configured charging parameters, the electric vehicle is charged. It should be noted that, at the charging stage, the control module on the vehicle assembly monitors information such as a voltage, a current, and temperature of the battery of the electric vehicle in real time, to ensure that the battery works in a normal state. When the battery is fully charged, the control module on the vehicle assembly sends a charging end packet to the control module on the ground assembly, to end charging.

It should be noted that, in the foregoing embodiments, except that the power receiving coil 11 needs to be disposed on the lower side of the heat dissipation plate 15, spatial positions of the other circuit components are merely used as an example, and in actual application, the spatial positions of the other circuit components may be adjusted, and are not limited to layout positions shown in FIG. 1 to FIG. 3.

It should be noted that, the power receiving coil in the rechargeable energy storage apparatus in the foregoing embodiment may be designed as a three-phase power receiving coil or a single-phase power receiving coil, and when being connected to different types of power receiving coils, switch modules in the inverter-rectifier module are different, and manners for connecting the switch module and the three-phase bridge circuit in the inverter-rectifier module are also different. On the basis of the foregoing embodiments, the following further describes a connection relationship between the circuit components in the rechargeable energy storage apparatus in this embodiment by using two specific connection circuits as an example.

FIG. 4 is a circuit connection diagram in which a power receiving coil is a three-phase power receiving coil. As shown in FIG. 4, a direct current terminal of a three-phase bridge circuit is connected in parallel to two capacitors C1 and C2 (this is only an example, and a quantity of capacitors that are connected in parallel may be adjusted based on actual requirements), and is connected to a direct current power supply (that is, the battery cell module in the foregoing embodiment) after being connected in parallel to the capacitors. An alternating current terminal of the three-phase bridge circuit is connected to an electric motor by using a first switch module K1, and is also connected to the three-phase power receiving coil by using a second switch module K2. Wiring terminals of three groups of windings of the electric motor are respectively connected to terminals U, V, and W of the three-phase bridge circuit by using three ways of single-pole single-throw switches in the first switch module K1. The three-phase power receiving coil is separately connected to the terminals U, V, and W of the three-phase bridge circuit by using three ways of single-pole single-throw switches in the second switch module K2.

Optionally, a resonant circuit is connected between the second switch module K2 and the three-phase power receiving coil, to compensate for an inductance of the three-phase power receiving coil. The resonant circuit may be connected in series, in parallel, or in series and in parallel to the three-phase power receiving coil.

Two sets of switch modules are disposed in a connection circuit in this embodiment, and three ways of single-pole single-throw switches in each set of switch modules are in a same working status at a same moment, to be specific, if a control module controls a first switch module to be closed, three ways of single-pole single-throw switches in the first switch module are all closed, and if the control module controls the first switch module to be opened, the three ways of single-pole single-throw switches in the first switch module are all opened. An implementation principle of the second switch module is the same as that of the first switch module. The control module controls working statuses of the two sets of switch modules to implement function switching of the three-phase bridge circuit.

In an implementation, the control module controls the first switch module to be closed and controls the second switch module to be opened, and the three-phase bridge circuit implements an inverter function, that is, converts a direct-current discharging current output by the battery cell module into an alternating current, to drive the electric motor to work, thereby implementing a discharging process.

In another implementation, the control module controls the first switch module to be opened and the first switch module to be closed, and the three-phase bridge circuit implements a rectifier function, that is, converts an alternating current output by the three-phase power receiving coil into a direct current, and outputs the direct current to the battery cell module, thereby implementing a charging process.

Optionally, in some embodiments, the first switch module K1 and the second switch module K2 may be combined into one single-pole double-throw switch. The single-pole double-throw switch is connected to either an electric motor or a power receiving coil, and there is no other connection status.

The power receiving coil in the rechargeable energy storage apparatus in this embodiment is a three-phase power receiving coil. The three-phase power receiving coil is connected to three terminals of the alternating current terminal of the three-phase bridge circuit by using the second switch module that includes three ways of single-pole single-throw switches, and at the same time, the electric motor is connected to the three terminals of the alternating current terminal of the three-phase bridge circuit by using the first switch module that includes three ways of single-pole single-throw switches. The control module may control the second switch module to be closed and the first switch module to be opened, to charge the battery cell module. The control module may further control the second switch to be opened and the first switch module to be closed, to supply power to the electric motor. The circuit integrates functions of an inverter and a rectifier, so that a quantity of circuit components in the energy storage apparatus is reduced, and circuit costs are reduced.

FIG. 5 is a circuit connection diagram in which a power receiving coil is a single-phase power receiving coil. As shown in FIG. 5, a direct current terminal of a three-phase bridge circuit is connected in parallel to two capacitors C1 and C2 and then is connected to a direct current power supply (that is, the battery cell module in the foregoing embodiment), and an alternating current terminal of the three-phase bridge circuit is connected to an electric motor by using a first switch module K1, and is also connected to the single-phase power receiving coil by using a second switch module K2. Wiring terminals of three groups of windings of the electric motor are respectively connected to terminals U, V, and W of the three-phase bridge circuit by using three ways of single-pole single-throw switches in the first switch module K1. The single-phase power receiving coil is connected to any two terminals of the three-phase bridge circuit by using two ways of single-pole single-throw switches in the second switch module K2, for example, the terminals U and W in FIG. 5. Optionally, a resonant circuit is connected in series between the second switch module K2 and the single-phase power receiving coil, to compensate for an inductance of the single-phase power receiving coil.

It can be learned that a difference between FIG. 4 and FIG. 5 lies only in a manner for connecting the power receiving coil and the three-phase bridge circuit. An implementation principle of a circuit in FIG. 5 is the same as that in FIG. 4. For details, refer to the embodiment shown in FIG. 4. Details are not described herein again.

The power receiving coil in the rechargeable energy storage apparatus in this embodiment is a single-phase power receiving coil. The single-phase power receiving coil is connected to any two terminals of the alternating current terminal of the three-phase bridge circuit by using the second switch module that includes two ways of single-pole single-throw switches, and at the same time, the electric motor is connected to the three terminals of the alternating current terminal of the three-phase bridge circuit by using the first switch module that includes three ways of single-pole single-throw switches. The control module may control the second switch module to be closed and the first switch module to be opened, to charge the battery cell module. The control module may further control the second switch to be opened and the first switch module to be closed, to supply power to the electric motor. The circuit integrates functions of an inverter and a rectifier, so that a quantity of circuit components in the energy storage apparatus is reduced, and circuit costs are reduced.

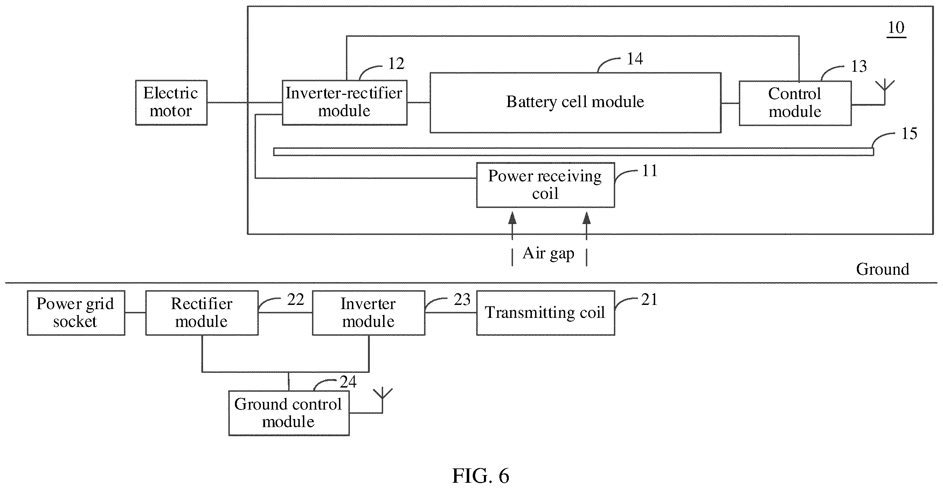

FIG. 6 is a schematic diagram of a wireless charging system for an electric vehicle according to an embodiment of this application. As shown in FIG. 6, the wireless charging system provided in this embodiment includes the rechargeable energy storage apparatus 10 on a vehicle assembly according to any one of the foregoing embodiments, and a transmitting coil 21, a rectifier module 22, an inverter module 23, and a ground control module 24 that are located on the ground.

An input end of the rectifier module 22 is connected to a power grid socket, an output end of the rectifier module 22 is connected to an input end of the inverter module 23, and an output end of the inverter module 23 is connected to the transmitting coil 21.

In this embodiment, the ground control module 24 includes a wireless transmit antenna, and is communicatively connected to a control module 13 in the energy storage apparatus 10 on the vehicle assembly by using the wireless transmit antenna. After charging parameter configuration is completed, the ground control module 24 controls the rectifier module 22 to convert a first alternating current on a power grid side into a direct current, and controls the inverter module 23 to convert the direct current into a second alternating current, and the transmitting coil 21 generates an alternating magnetic field under the action of the second alternating current. A power receiving coil 11 in the energy storage apparatus 10 generates an alternating current in the alternating magnetic field. For a charging process of the energy storage apparatus 10, refer to the foregoing embodiment. Details are not described herein again.

Both the ground control module 24 and the vehicle-mounted control module 13 in this embodiment have a communication function. Specifically, the ground control module 24 may communicate with the vehicle-mounted control module 13 in a wireless connection manner such as Bluetooth or Wi-Fi. In addition to communicating with the ground control module 24, the vehicle-mounted control module 13 further communicates with another device or component on the electric vehicle through a CAN bus.

The transmitting coil in this embodiment may be a three-phase transmitting coil or a single-phase transmitting coil. It should be noted that, the transmitting coil located on the ground and the power receiving coil in the energy storage apparatus on the vehicle assembly may be of a same type or different types. This is not specifically limited in this embodiment.

Usually, the rectifier module 22 in this embodiment is also referred to as a PFC module, that is, a power factor correction module. In addition to converting a 50 Hz alternating current into a direct current, the rectifier module 22 in this embodiment needs to ensure that a power factor meets a power grid requirement.

Optionally, a DC/DC module may be disposed between the rectifier module 22 and the inverter module 23, to implement a direct current voltage regulation function. Whether the DC/DC module is needed depends on a control policy and an output voltage range of the wireless charging system.

Optionally, similar to the power receiving coil 11 on the vehicle assembly, a resonant circuit may also be disposed between the transmitting coil 21 and the inverter module 23, to compensate for an inductance amount of the transmitting coil 21. Herein, any resonant circuit in the prior art may be used to compensate for an inductance of the transmitting coil 21, to improve efficiency. The resonant circuit may be connected in series to the transmitting coil 21, may be connected in parallel to the transmitting coil 21, or may be connected in series and in parallel to the transmitting coil 21. This is not specifically limited in this embodiment.

An embodiment of this application further provides an electric vehicle. The electric vehicle includes the rechargeable energy storage apparatus according to any one of the foregoing embodiments, and the energy storage apparatus is disposed at the bottom of the electric vehicle.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A rechargeable energy storage apparatus, comprising:
a power receiving coil, an inverter-rectifier module, a control module, a battery cell module, and a heat dissipation plate, wherein
the inverter-rectifier module is separately connected to the power receiving coil, the control module, and the battery cell module, the battery cell module is connected to the control module, and the power receiving coil is disposed on a lower side of the heat dissipation plate;
the power receiving coil is configured to generate an alternating current when receiving an alternating magnetic field generated by a transmitting coil located on the ground; and
the control module is configured to control the inverter-rectifier module to convert the alternating current output by the power receiving coil into a direct current and output the direct current to the battery cell module, and the control module is further configured to control the inverter-rectifier module to convert the direct current output by the battery cell module into an alternating current, to drive an electric motor to work.

2. The energy storage apparatus according to claim 1, wherein the inverter-rectifier module comprises a three-phase bridge circuit and a switch module; a direct current terminal of the three-phase bridge circuit is connected to the battery cell module, and an alternating current terminal of the three-phase bridge circuit is separately connected to the electric motor and the power receiving coil by using the switch module; and the control module is separately connected to the three-phase bridge circuit and the switch module.

3. The energy storage apparatus according to claim 2, wherein the switch module comprises a first switch module and a second switch module that are connected in parallel; and the electric motor is connected in series on a tributary on which the first switch module is located, and the power receiving coil is connected in series on a tributary on which the second switch module is located.

4. The energy storage apparatus according to claim 2 or 3, wherein the three-phase bridge circuit comprises three groups of power semi-conductors, the three groups of power semi-conductors form three bridge arms, the electric motor is connected to a midpoint of each bridge arm by using the first switch module, and the power receiving coil is connected to the midpoint of each bridge arm by using the second switch module.

5. The energy storage apparatus according to any one of claims 1 to 4, wherein the energy storage apparatus further comprises a resonant circuit, and the resonant circuit is configured to compensate for an inductance amount of the power receiving coil.

6. The energy storage apparatus according to any one of claims 1 to 5, wherein the inverter-rectifier module, the control module, and the battery cell module are disposed on an upper side of the heat dissipation plate.

7. The energy storage apparatus according to any one of claims 1 to 6, wherein the energy storage apparatus further comprises a high-voltage interface, and the inverter-rectifier module is connected to the electric motor by using the high-voltage interface.

8. The energy storage apparatus according to any one of claims 1 to 7, wherein the control module comprises a wireless transmit antenna, and the control module is communicatively connected, by using the wireless transmit antenna, to a control module located on the ground.

9. A wireless charging system for an electric vehicle, comprising:
the energy storage apparatus according to any one of claims 1 to 8, and a transmitting coil, a rectifier module, an inverter module, and a ground control module that are located on the ground, wherein
the ground control module is configured to: control the rectifier module to convert a first alternating current on a power grid side into a direct current, and control the inverter module to convert the direct current into a second alternating current, and the transmitting coil is configured to generate an alternating magnetic field under the action of the second alternating current.

10. An electric vehicle, comprising the energy storage apparatus according to any one of claims 1 to 8, wherein the energy storage apparatus is disposed at the bottom of the electric vehicle.
